# EUROPÄISCHE PATENTSCHRIFT

(11) **EP 3 943 271 B1**
(45) Veröffentlichungstag und Bekanntmachung des Hinweises auf die Patenterteilung: **14.09.2022**
(21) Anmeldenummer: 21185703.2
(22) Anmeldetag: 15.07.2021
(51) Int. Cl.: B29C 45/16, B29C 45/14, B29C 45/33, B29C 45/44, H01R 43/18

(54) **VERFAHREN ZUM HERSTELLEN EINES ELEKTRISCHEN STECKVERBINDERS FÜR EIN MEHRADRIGES, ELEKTRISCHES KABEL**
METHOD OF MAKING AN ELECTRICAL CONNECTOR FOR A MULTICORE ELECTRICAL CABLE
PROCÉDÉ DE FABRICATION D'UN CONNECTEUR ENFICHABLE ÉLECTRIQUE POUR UN CÂBLE ÉLECTRIQUE À FILS MULTIPLES

(30) Priorität: 23.07.2020 DE 102020119478
(43) Veröffentlichungstag der Anmeldung: 26.01.2022
(73) Patentinhaber: MD Elektronik GmbH, 84478 Waldkraiburg (DE)
(72) Erfinder: Halbig, Thomas, 92345 Dietfurt (DE); Krause, Peter, 84431 Rattenkirchen (DE)

(56) Entgegenhaltungen:
- DE-A1-102016 215 686
- DE-B4-102011 084 741
- JP-A- 2012 022 928

## Beschreibung

### Technisches Gebiet

Die Erfindung betrifft ein Verfahren zum Herstellen eines elektrischen Steckverbinders für ein mehradriges elektrisches Kabel.

### Stand der Technik

Im Stand der Technik ist es bekannt, ein- und/oder mehradrige Kabel an Endabschnitten mit Steckverbindern auszustatten, um die Kabel lösbar mit weiteren Verbindungspartnern verbinden zu können. Häufig werden hierzu Bestandteile des Steckverbinders mittels Umformverfahren, wie Präge- oder Biegeprozesse am Kabel befestigt. Zusätzlich kann es erforderlich sein, weitere Bestandteile mit formgebenden Verfahren, wie Spritzguss am Kabel anzuordnen. In der Praxis besteht häufig das Problem, dass für die verschiedenen Verfahren, die für die Herstellung und Anordnung der einzelnen Bestandteile des Steckverbinders eine Vielzahl von Fertigungsmaschinen notwendig ist. Dies erhöht die sowohl den Herstellungsaufwand als auch die Herstellungskosten erheblich.

Die DE 10 2016215 686 A1 offenbart einen Steckverbinder, der einen Isolierkörper aufweist und elektrische Leitungsenden, die mit Steckkontakten verbunden sind. Der Isolierkörper wird durch eine angespritzte materialeinheitliche Isoliermasse gebildet, die die Steckkontakte und die Leitungsenden materialschlüssig umgibt. In die Isoliermasse des Isolierkörpers ist eine elektrisch leitfähige Abschirmhülse zumindest abschnittsweise materialschlüssig eingebettet, die die Steckkontakte und die elektrischen Leitungsenden elektromagnetisch abschirmend umgibt.

Die JP 2012 - 22 928 A offenbart ein Verfahren zum Herstellen eines Innenleiterkontakts für einen Verbinder mit einem Isolator. Ein Innenleiter eines geschirmten Kabels wird in einem Crimpbereich des Innenleiterkontakts angeordnet. Eine innere Klemmenform, die eine obere Matrize und eine untere Matrize umfasst, ist an der inneren Klemme montiert. Der Crimpbereich wird durch einen konkaven Crimperteil der oberen Matrize und einen konkaven Ambossteil der unteren Matrize in Presskontakt mit dem Innenleiter des geschirmten Kabels verpresst. Im Anschluss wird ein Einspritzraum um den Innenleiterkontakt ausgebildet und mit einem Harzmaterial gefüllt, um den Isolator zu formen.

Die DE 10 2009 049 132 A1 offenbart ein Verfahren zur Herstellung und einen geschirmten Steckverbinder, der an einem Ende eines abgeschirmten Kabels angeordnet ist. In einem Kontaktträger ist zumindest ein Kontaktpartner, der mit einem elektrischen Leiter des Kabels verbunden ist, angeordnet. Es ist eine Hülse aus einem elektrisch leitfähigen Material vorgesehen, wobei die Hülse auf einem Abschirmgeflecht des Kabels angeordnet und mit diesem elektrisch kontaktiert ist. Weiterhin ist ein Raum zwischen dem Kontaktträger und der Hülse mit einem elektrisch nicht leitfähigen Kunststoff ausgefüllt. Eine Außenhülse ist übergreifend zumindest teilweise über den Kontaktträger, den Raum und die Hülse angeordnet, wobei eine Oberfläche der Hülse einen Innenbereich der Außenhülse zur elektrischen Kontaktierung berührt.

### Beschreibung der Erfindung

Der Erfindung liegt die Aufgabe zugrunde, ein Verfahren der eingangs genannten Art im Hinblick auf den Herstellungsprozess zu verbessern.

Die Aufgabe wird erfindungsgemäß durch die Schaffung eines Verfahrens mit den Merkmalen des Gegenstandes des unabhängigen Anspruchs gelöst.

Die Erfindung betrifft ein Verfahren zum Herstellen eines elektrischen Steckverbinders für ein mehradriges elektrisches Kabel, dessen Adern an einem mit dem Steckverbinder zu versehenen Endabschnitt des elektrischen Kabels im Querschnitt ringförmig von einem Außenleiter umgeben sind. Bei einem derartigen Verfahren wird der Außenleiter einerseits abschnittsweise mittels mindestens eines (ersten) Stempels radial in Richtung auf die Adern des Kabels gedrückt und andererseits abschnittsweise in einem Spritzgusswerkzeug mit einer Umspritzung versehen.

Danach ist bei einem gattungsgemäßen Verfahren weiterhin vorgesehen, dass der mindestens eine (erste) Stempel nach dem Verformen des Außenleiters an dem Außenleiter positioniert wird oder positioniert bleibt, so dass der (erste Stempel) einen zur Bildung der Umspritzung des Außenleiters mit plastifizierter Formmasse zu befüllenden Formhohlraum teilweise begrenzt und dass zur weiteren Begrenzung des Formhohlraumes mindestens ein Werkzeugteil des Spritzgusswerkzeugs in Richtung des Außenleiters geführt wird und in dessen Umgebung positioniert wird, bevor anschließend plasitifizierte Formmasse in den Formhohlraum eingelassen wird.

Die erfindungsgemäße Lösung erlaubt die Zusammenfassung der gezielten Verformung des Außenleiters, beispielsweise durch einen eines Präge- und/oder Biegeprozesses, mit dem Umspritzen des Außenleiters zu einem Arbeitsvorgang, der innerhalb eines Werkzeugs durchgeführt werden kann, wobei der mindestens eine (erste) Stempel an und insbesondere in jenem Werkzeug angeordnet ist.

Hierbei kann der mindestens eine Stempel nach dem Verformen des Außenleiters derart in Kontakt an Außenleiter positioniert werden oder positioniert bleiben, dass der Formhohlraum hierdurch abgedichtet wird und die in den Formhohlraum eingelassene plastifizierte Formmasse nicht auf die von dem mindestens einen ersten Stempel überdeckten Bereiche des Außenleiters gelangt. Der überdeckte Bereich bleibt also mit anderen Worten frei von der plastifizierten Formmasse.

Konkret kann der mindestens eine Stempel radial auf den Außenleiter einwirken, um den Abstand zwischen den Adern und dem Außenleiter in radialer Richtung zu reduzieren.

Vorteilhaft verformen zwei erste Stempel in unterschiedlichen Richtungen jeweils radial den Außenleiter, um diesen in Richtung auf die Adern zu drücken, wobei jene Stempel insbesondere auf denselben axialen Teilabschnitt des Außenleiters einwirken. Dies kann bedeuten, dass die Stempel einander in radialer Richtung im Wesentlichen gegenüberliegen.

Um (gemeinsam mit dem mindestens einen ersten Stempel) den Formhohlraum begrenzen, in welchem der Außenleiter zumindest abschnittsweise mit einer Umspritzung versehen wird, können mindestens zwei Werkzeugteile geeignet in der Umgebung des Außenleiters positioniert werden. Ein jeweiliges Werkzeugteil kann hierbei durch einen Schieber gebildet werden, der in radialer Richtung bezüglich des Außenleiters bewegbar ist, um den Formhohlraum zu begrenzen oder den Formhohlraum freizugeben.

Gemäß einer Weiterbildung umfasst das elektrische Kabel im Bereich des (herzustellenden) Steckverbinders einen Schirm, der die Adern des elektrischen Kabels im Querschnitt ringförmig umgibt und der insbesondere ein Schirmgeflecht aufweisen kann. Hierbei kann zudem vorgesehen sein, dass mindestens ein weiterer (zweiter) Stempel auf den Außenleiter einwirkt, um den Außenleiter derart zu deformieren, dass sich dieser in definiertem, dauerhaftem elektrischen Kontakt mit dem Schirm des Kabels befindet. Konkret können insbesondere zwei weitere, zweite Stempel in unterschiedlichen Richtungen auf den Außenleiter einwirken, um den Außenleiter derart zu deformieren, dass dieser in elektrischem Kontakt mit dem Schirm des Kabels steht. Ein jeweiliger weiterer, zweiter Stempel kann dabei an und insbesondere in dem Werkzeug angeordnet sein, in welchem der Außenleiter des elektrischen Kabels mit einer Umspritzung versehen wird.

Nach einer Weiterbildung des Verfahrens kann der Schirm des Kabels in dem Bereich, in welchem der Schirm durch Deformieren des Außenleiters mit letzterem in elektrischen Kontakt gebracht wird, an einem die Adern ringförmig umgreifenden Stützelement abgestützt sein, z.B. dadurch, dass der Schirm des Kabels über das Stützelement geschlagen wird.

Nach einer Ausführungsform des erfindungsgemäßen Verfahrens wird der mindestens eine weitere, zweite Stempel nach dem Verformen des Außenleiters von dem elektrischen Kabel entfernt und an dessen Stelle das mindestens eine Werkzeugteil am elektrischen Kabel positioniert, um den Formhohlraum zu bilden, in welchem der Außenleiter, durch Einlassen bzw. Einspritzen einer Formmasse, zumindest abschnittsweise mit einer Umspritzung versehen wird (und welcher Formhohlraum zusätzlich durch den mindestens einen ersten Stempel abgedichtet bzw. begrenzt wird). D.h., durch das Entfernen des mindestens einen weiteren (zweiten) Stempels von dem elektrischen Kabel kann der besagte Formhohlraum nunmehr durch geeignete Werkzeugteile des Gusswerkezeugs gezielt begrenzt werden. Anders ausgedrückt, wird durch das Entfernen des mindestens einen weiteren, zweiten Stempels von dem elektrischen Kabel derjenige Raum freigegeben, der anschließend mittels des mindestens einen Werkzeugteiles als Formhohlraum definiert wird

Die erfindungsgemäße Lösung betrifft ferner einen elektrischen Steckverbinder, der mit dem erfindungsgemäßen Verfahren hergestellt worden ist.

Weitere Einzelheiten und Vorteile der Erfindung werden bei der nachfolgenden Beschreibung von Ausführungsbeispielen anhand der Figuren deutlich werden.

Es zeigen:
- Figur 1A: ein Einlegeteil für ein Spritzgusswerkzeug als Ausgangspunkt für die Herstellung eines elektrischen Steckverbinders an einem mehradrigen elektrischen Kabel, welches ein Schirmgeflecht sowie einen Kabelmantel aufweist;
- Figur 1B: das Einlegeteil aus Figur 1A nach einem ersten Verarbeitungsschritt, umfassend das Aufbringen eines Stützcrimps;
- Figur 1C: das Einlegeteil aus Figur 1B nach einem weiteren Verarbeitungsschritt, umfassend das Umschlagen des Schirmgeflechtes auf den Stützcrimp;
- Figur 1D: das Einlegeteil aus Figur 1C nach noch einem weiteren Verarbeitungsschritt, umfassend das Aufbringen eines Außenleiters;
- Figur 2: das Einlegeteil aus Figur 1D zusammen mit Stempeln zur Einwirkung auf das Einlegeteil;
- Figur 3: das Einlegeteil aus Figur 1D nach dem Einwirken der Stempel gemäß Figur 2;
- Figur 3A: eine erste Schnittansicht des Einlegeteils aus Figur 3;
- Figur 3B: eine zweite Schnittansicht des Einlegeteils aus Figur 3;
- Figur 4: die Anordnung aus Figur 2 zusammen mit Schiebern eines Spritzgusswerkzeugs zur Begrenzung eines Formhohlraumes, um das Einlegeteil abschnittsweise mit einer Umspritzung zu versehen;
- Figur 5: die Anordnung aus Figur 4 mit in ihrer Endposition befindlichen Schiebern;
- Figur 6: das Einlegeteil aus Figur 3 nach dem abschnittsweisen Umspritzen gemäß den Figuren 4 und 5; und
- Figur 7: das Einlegeteil aus Figur 6 nach dem Einbringen in ein Steckergehäuse.

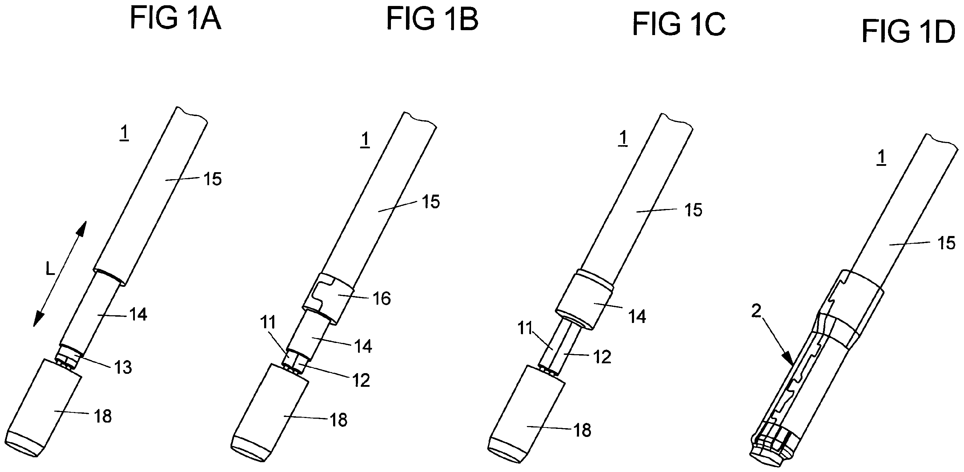

Figur 1A zeigt einen Abschnitt eines mehradrigen elektrischen Kabels 1, bei dem es sich um einen axialen Endabschnitt des Kabels 1 handelt, der zur Bildung eines elektrischen Steckverbinders weiterbearbeitet werden soll und der vorliegend auch als Einlegeteil bezeichnet wird. Das elektrische Kabel 1 ist im Ausführungsbeispiel als ein zweiadriges elektrisches Kabel ausgeführt. Die beiden Adern 11, 12 des Kabels 1 verlaufen dabei entlang der Kabellängsrichtung L nebeneinander; sie bilden bei ausgestrecktem Kabel parallele Adern. Die Adern 11, 12 umfassen beispielsweise jeweils eine elektrische Leitung sowie eine die jeweilige Leitung umgebende isolierende Hülle.

Die Adern 11, 12 des elektrischen Kabels 1 sind gemeinsam in einem Kabelinnenraum angeordnet, der durch einen in Kabellängsrichtung L verlaufenden Kabelmantel 15 im Querschnitt ringförmig umschlossenen ist. Der Kabelmantel 15 besteht aus einem elektrisch isolierenden Material.

Zwischen dem zur Aufnahme der Adern 11, 12 dienenden Kabelinneren und dem Kabelmantel 15 ist weiterhin ein die Adern 11, 12 umgebender, entlang der Kabellängsrichtung L erstreckter Kabelschirm 13, 14 angeordnet. Der Kabelschirm kann beispielsweise durch ein Schirmgeflecht oder auch durch eine Folie gebildet sein oder durch ein Schirmgeflecht in Kombination mit einer Folie. Die letztgenannte Variante ist in Figur 1A gezeigt, wobei die ergänzende Schirmfolie 13 auf der den Adern 11, 12 zugewandten Innenseite des Schirmgeflechtes 14 angebracht ist.

Der Kabelschirm 13, 14 dient der elektrischen Abschirmung des Kabelinneren und weist hierzu ein metallischen Material, wie z.B. Aluminium, auf. Dabei kann als Schirmfolie 13 eine Kunststofffolie verwendet werden, die, insbesondere auf der dem Kabelinneren zugewandten Innenseite, mit einem elektrisch leitfähigen Material, wie z.B. Aluminium, beschichtet ist.

Metallische Schirmgeflechte werden vor allem zur Abschirmung bei vergleichsweise niedrigen Frequenzen verwendet und Kabelschirme in Form von metallischen oder mit Metall beschichteten Folien zur Abschirmung bei vergleichsweise hohen Frequenzen (1 MHz bis 10 GHz).

Der Kabelschirm 13, 14 kann mit dem Kabelmantel 15 zu einer Baueinheit zusammengefasst sein, z.B. indem der Kabelschirm 13, 14 an seiner den Adern 11, 12 abgewandten äußeren Oberfläche mit dem Kabelmantel 15 verbunden ist, etwa über ein Klebemittel.

In der in Figur 1A gezeigten Konfiguration ist das elektrische Kabel 1 an seinem axialen Endabschnitt, an dem der Steckverbinder auszubilden ist, teilweise von dem Kabelmantel 15 befreit, so dass dort der Kabelschirm 14 bzw. dessen Schirmgeflecht 14 die äußere Oberfläche des elektrischen Kabels bildet. Ferner ist das elektrische Kabel 1 im Ausführungsbeispiel an seinem freien Ende durch eine vom Kabelmantel 15 entlang der Kabellängsrichtung L beabstandete isolierende Hülse 18 überdeckt. Hierdurch besteht entlang der Kabellängsrichtung L zwischen dem Kabelmantel 15 und der isolierenden Hülse 18 ein Bereich, in welchem das Schirmgeflecht 14 die äußere Oberfläche des elektrischen Kabels 1 bildet.

Gemäß Figur 1B wird auf das elektrische Kabel 1 bzw. genauer auf dessen axialen Endabschnitt (Einlegeteil) ein Stützcrimp 16 aufgebracht, derart, dass an den Stützcrimp 16 ein Bereich des elektrischen Kabels 1 angrenzt, in welchem das Schirmgeflecht 14 nicht von dem Kabelmantel 15 umgeben ist, also die äußere Oberfläche des elektrischen Kabels 1 bildet. Im Ausführungsbeispiel ist der Stützcrimp 16 nach innen teilweise auf das Schirmgeflecht 14 und teilweise auf den Kabelmantel 15 aufgebracht.

Sodann wird gemäß Figur 1C der Kabelschirm 14 bzw. konkret im Ausführungsbeispiel dessen befreites Schirmgeflecht 14 umgeschlagen, so dass dieses den Stützcrimp 16 auf der den Adern 11, 12 abgewandten Außenseite überdeckt. Dies hat weiter zur Folge, dass sich an den vom umgeschlagenen Schirmgeflecht 14 überdeckten Stützcrimp 16 auf der einen Seite, nämlich zum freien Ende des Kabels 1 bzw. der isolierenden Hülse 18 hin, axial die frei liegenden Adern 11, 12 des Kabels 1 anschließen und sich auf der anderen Seite axial ein vom Kabelmantel 15 umschlossener Kabelabschnitt anschließt.

Schließlich wird, wie in Figur 1D gezeigt, auf den axialen Endabschnitt des elektrischen Kabels 1 ein Außenleiter 2 aufgebracht, im Ausführungsbeispiel in Form eines Außenrohres, der aus einem elektrisch leitfähigen Material besteht und der den Endabschnitt im Querschnitt ringförmig bzw. im Ausführungsbeispiel konkret kreisringförmig umgibt. Der Außenleiter 2 erstreckt sich entlang einer Längsrichtung (Kabellängsrichtung L), d.h., axial, von einem ersten, kabelseitigen Endabschnitt 22 zu einem zweiten, ausgangsseitigen Endabschnitt 23, die beidseits eines mittleren Abschnitts 21 des Außenleiters 2 angeordnet sind.

Der Außenleiter 2 überdeckt den Stützcrimp 16 sowie den hierauf umgeschlagenen Abschnitt des Schirmgeflechtes 14. Ferner überdeckt der Außenleiter 2 im Ausführungsbeispiel insbesondere denjenigen Bereich des Endabschnittes des elektrischen Kabels 1, in welchem die Adern 11, 12 freiliegen, also nicht von weiteren Komponenten des elektrischen Kabels 1 umgeben sind, sowie gegebenenfalls einen (an den Stützcrimp 16 anschließenden) Teil des Kabelmantels 15 und/oder (teilweise) die isolierende Hülse 18.

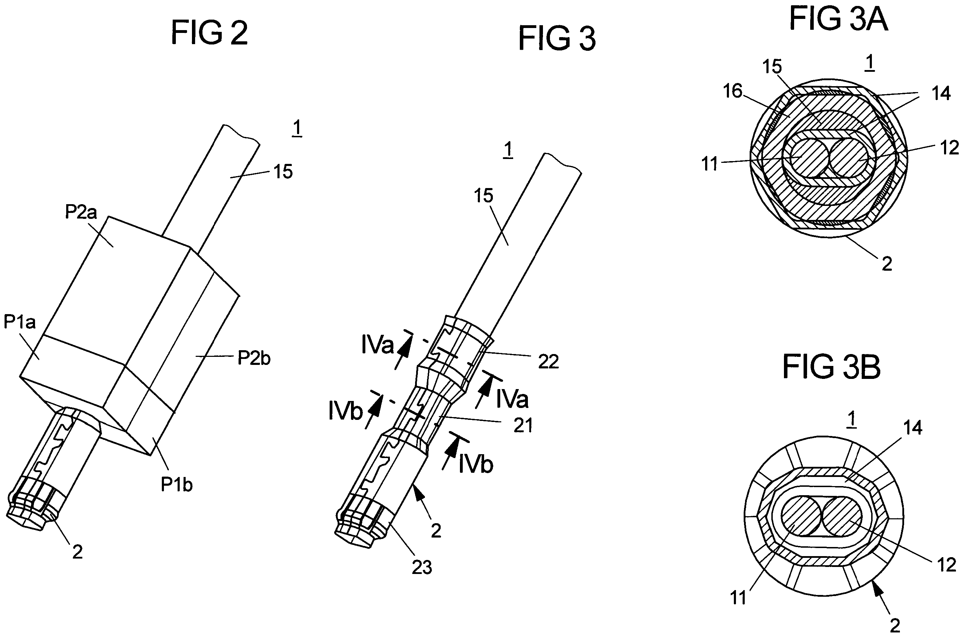

Der derart vorbereitete Endabschnitt des elektrischen Kabels 1 wird im Bereich des Außenleiters 2 mit mindestens einem Stempel (Presstempel P1a, P1b; P2a, P2b), der radial von außen den Außenleiter 2 verformt bzw. konkret lokal zusammengedrückt. Im Ausführungsbeispiel der Figur 2 erfolgt die Verformung mittels Stempeln P1a, P1b; P2a, P2b, die entlang unterschiedlicher Richtungen, insbesondere entlang entgegengesetzter Richtungen, jeweils paarweise radial den Außenleiter 2 verformen.

Konkret erfolgt vorliegend die Verformung an zwei axial, entlang der Kabellängsrichtung L, voneinander beanstandeten Stellen des axialen Endabschnittes elektrischen Kabels 1 bzw. des Außenleiters 2, und an diesen insbesondere mittels jeweils eines Paares von Stempeln P1a, P1b bzw. P2a, P2b.

Der bzw. die Stempel P1a, P1b bzw. P2a, P2b können dabei (als Pressstempel) an bzw. konkret in einem Spritzgusswerkzeug vorgesehen sein, in welches der axiale Endabschnitt des elektrischen Kabels 1 als ein Einlegeteil eingebracht wird und in welchem jener axiale Endabschnitt anschließend (abschnittsweise) umspritzt werden soll.

Das Verformen des Außenleiters 2 mittels eines jeweiligen Stempels P1a, P1b bzw. P2a, P2b kann insbesondere erfolgen, nachdem der Außenleiter 2 als Bestandteil des elektrischen Kabels 1 in ein (Spritzguss-)Werkzeug eingesetzt worden ist, in welchem der Außenleiter 2 mit einer Umspritzung versehen werden soll.

An einem ersten axialen Teilabschnitt des Außenleiters 2 (mittlerer Abschnitt 21) erfolgt die radiale Verformung mindestens eines ersten Stempels bzw. konkret zweier erster Stempel P1a, P1b zur Reduzierung des radialen Abstandes zwischen dem Außenleiter 2 und den Adern 11, 12 des elektrischen Kabels 1, indem der besagte Teilabschnitt 21 des Außenleiters 2 nach innen gedrückt und dabei deformiert wird, wie in den Figuren 3 und 3b gezeigt, wodurch eine Verbesserung des Wellenwiderstandes erzielbar ist. In jenem Teilabschnitt 21 des Außenleiters 2 liegen die Adern 11, 12 des elektrischen Kabels 1 insoweit frei, als sie ausschließlich und unmittelbar vom Außenleiter 2 umgeben sind, nicht aber von dem Kabelschirm 13, 14 oder dem Stützcrimp 16.

An einem anderen, zweiten axialen Teilabschnitt des Außenleiters 2 (kabelseitiger Endabschnitt 22) erfolgt die radiale Verformung mindestens eines zweiten Stempels bzw. konkret zweier zweiter Stempel P2a, P2b zur Herstellung einer definierten elektrischen Anbindung an das (umgeschlagene) Schirmgeflecht 14, also zur "Masseanbindung", und/oder zur Bereitstellung einer Zugentlastung, indem der besagte Teilabschnitt 21 des Außenleiters 2 nach innen gepresst und dabei deformiert wird, wie in den Figuren 3 und 3a gezeigt, wobei er radial gegen das Schirmgeflecht 14 und gegebenenfalls gegen den Kabelmantel 15 gedrückt wird.

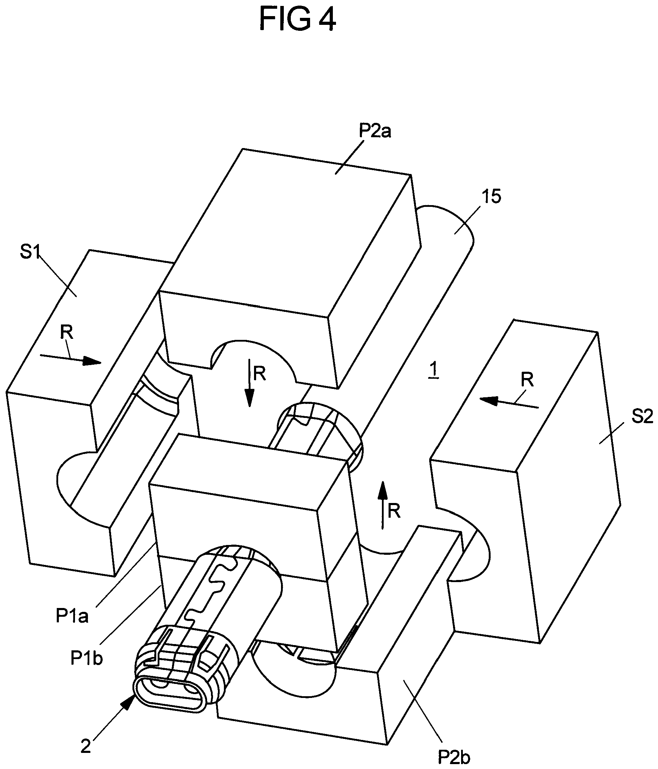

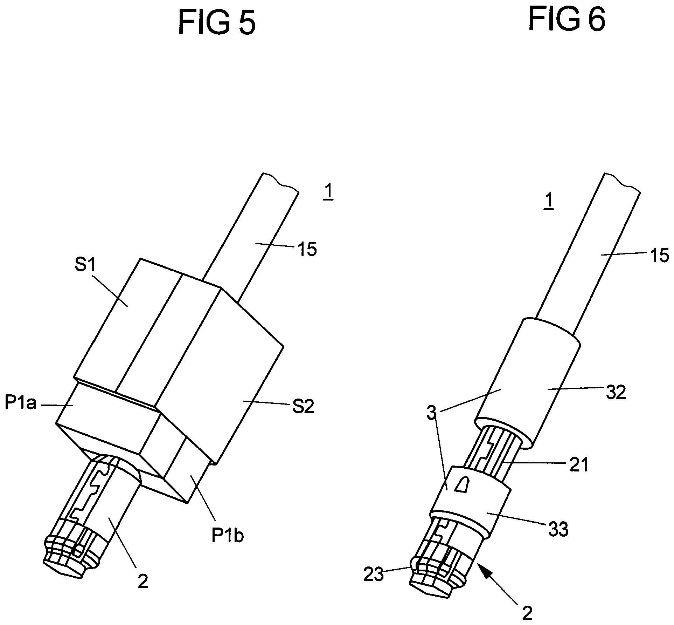

Wie in den Figuren 4 und 5 gezeigt, werden anschließend die Stempel P2a, P2b des zweiten Stempelpaares in radialer Richtung R von dem Außenleiter 2 entfernt und es wird stattdessen mindestens ein Schieber S1, S2 bzw. konkret eine Paar von Schiebern S1, S2 des Spritzgusswerkzeugs derart (in radialer Richtung R) dem Außenleiter 2 angenähert und in dessen Umgebung positioniert, dass hierdurch ein von den Schiebern S1, S2 begrenzter Formhohlraum (Kavität) geschaffen wird, der mit einer plastifizierten Formmasse befüllt wird, um den in das Spritzgusswerkzeug eingelegten Endabschnitt des elektrischen Kabels 1 (Einlegeteil) bzw. konkret dessen Außenleiter 2 und gegebenenfalls einen Teil des Kabelmantels 15 mit der Formmasse, wie z.B. plastifiziertem Kunststoff, zu umspritzen, woraus eine entsprechende abschnittsweise Umspritzung 32 resultiert, wie in Figur 6 dargestellt.

Die abschnittsweise Umspritzung 32 kann den Kabelmantel 15 mit einem - gegen den Stützcrimp 16 gepressten - Teilabschnitt (Endabschnitt 22) des Außenleiters 2 verbinden und hierdurch der Zugentlastung des elektrischen Kabels 1 und insbesondere des Kabelmantels 15 dienen.

Während des beschriebenen Spritzgussprozesses verbleiben der mindestens eine erste Stempel bzw. die Stempel S1a, S1b des ersten Stempelpaares am elektrischen Kabel 1 bzw. genauer am Außenleiter 2 und können hierdurch zur seitlichen Begrenzung und insbesondere Abdichtung des Formhohlraumes beitragen, so dass keine plastifizierte Formmasse auf die hiervon überdeckten Bereiche des Außenleiters 2 gerät, wie anhand des nicht umspritzten mittleren Bereiches des Außenleiters 2 (bei Bezugsziffer 21 in Figur 6) erkennbar.

Wie anhand Figur 6 ferner deutlich wird, kann zusätzlich, auf der den Schiebern S1, S2 abgewandten Seite der ersten Stempel S1a, S1b eine weitere teilweise Umspritzung 33 auf den Außenleiters 2, z.B. an dessen ausgangsseitigem Endabschnitt 23, aufgebracht sein, bei deren Herstellung wiederum die ersten Stempel S1a, S1b zur (seitlichen) Begrenzung und gegebenenfalls Abdichtung des entsprechenden Formhohlraumes dienen können. Die weitere Umspritzung 33 kann z.B. zum Anbringen mechanischer Elemente dienen und insbesondere ein angeformtes Rastelement, wie einen Rasthaken, zur Festlegung eines Steckergehäuses aufweisen. Es resultiert dann eine Umspritzung 3 des Außenleiters 2, die aus mehreren teilweisen Umspritzungen 32, 33 gebildet ist.

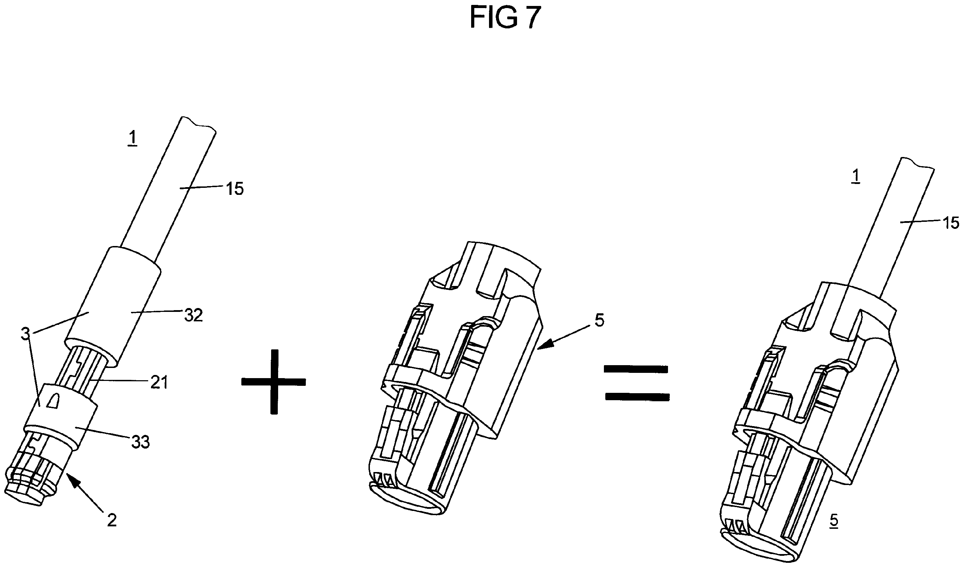

Abschließend wird auf den entsprechend vorbereiteten axialen Endabschnitt des elektrischen Kabels 1 ein Steckergehäuse 5 aufgeschoben, wie in Figur 7 dargestellt, und z.B. mittels eines am axialen Endabschnitt des elektrischen Kabels 1 vorgesehenen Rasthakens hieran festgelegt.

## Patentansprüche

1. Verfahren zum Herstellen eines elektrischen Steckverbinders an einem Endabschnitt eines mehradrigen elektrischen Kabels (1), dessen Adern (11, 12) in dem Endabschnitt von einem Außenleiter (2) im Querschnitt ringförmig umgeben sind, wobei einerseits mindestens ein Stempel (P1a, P1b) radial abschnittsweise den Außenleiter (2) in Richtung der Adern (11, 12) verformt und andererseits der Außenleiter (2) abschnittsweise in einem Spritzgusswerkzeug mit einer Umspritzung (3) versehen wird,
**dadurch gekennzeichnet,**
**dass** der mindestens eine Stempel (P1a, P1b) nach dem Verformen des Außenleiters derart an dem Außenleiter (2) positioniert wird, dass der Stempel (P1a, P1b) einen zur Bildung der Umspritzung (3) mit plastifizierter Formmasse zu befüllenden Formhohlraum teilweise begrenzt und dass zur weiteren Begrenzung des Formhohlraumes mindestens ein Werkzeugteil (S1, S2) des Spritzgusswerkzeugs in Richtung des Außenleiters (2) geführt und in dessen Umgebung positioniert wird.

2. Verfahren nach Anspruch 1, **dadurch gekennzeichnet, dass** der mindestens eine Stempel (P1a, P1b) nach dem Verformen derart an dem Außenleiter (2) positioniert wird, dass der Formhohlraum abgedichtet wird und ein von dem mindestens einem Stempel (P1a, P1b) überdeckter Bereich des Außenleiters (2) frei von der in den Formholmraum eingebrachten plastifizierten Formmasse bleibt.

3. Verfahren nach Anspruch 1 oder 2, **dadurch gekennzeichnet, dass** der mindestens eine Stempel (P1a, P1b) den Außenleiter (2) radial verformt, um den Abstand zwischen den Adern (11, 12) und dem Außenleiter (2) in radialer Richtung (R) zu reduzieren.

4. Verfahren nach einem der vorhergehenden Ansprüche, **dadurch gekennzeichnet, dass** der mindestens eine Stempel (P1a, P1b) an dem Spritzgusswerkzeug angeordnet ist, so dass der Endabschnitt des elektrischen Kabels (1) an dem Spritzgusswerkzeug platziert wird, bevor der mindestens eine Stempel (P1a, P1b) den Außenleiter (2) verformt.

5. Verfahren nach einem der vorhergehenden Ansprüche, **dadurch gekennzeichnet, dass** mindestens zwei Werkzeugteile (S1, S2) derart in der Umgebung des Außenleiters (2) positioniert werden, dass die Werkzeugteile (S1, S2) gemeinsam mit dem mindestens einen Stempel (P1a, P1b) den Formhohlraum begrenzen.

6. Verfahren nach einem der vorhergehenden Ansprüche, **dadurch gekennzeichnet, dass** das jeweilige Werkzeugteil (S1, S2) durch einen Schieber gebildet wird, der in radialer Richtung (R) bezüglich des Außenleiters (2) bewegbar ist, um den Formhohlraum zu begrenzen oder den Formhohlraum freizugeben.

7. Verfahren nach einem der vorhergehenden Ansprüche, **dadurch gekennzeichnet, dass** das elektrische Kabel (1) im Bereich des Steckverbinders einen Schirm (13, 14) aufweist, der die Adern (11, 12) des elektrischen Kabels umgibt und mindestens ein weiterer Stempel (P2a, P2b) den Außenleiter (2) verformt, um den Außenleiter (2) derart zu deformieren, dass dieser in elektrischen Kontakt mit dem Schirm (14) steht.

8. Verfahren nach Anspruch 7, **dadurch gekennzeichnet, dass** zwei weitere Stempel (P2a, P2b) in unterschiedlichen Richtungen den Außenleiter (2) verformen, um den Außenleiter (2) derart zu deformieren, dass dieser in elektrischen Kontakt mit dem Schirm (14) des Kabels (1) steht.

9. Verfahren nach Anspruch 7 oder 8, **dadurch gekennzeichnet, dass** der Schirm (13, 14) des Kabels (1) in dem Bereich, in welchem der Schirm (13, 14) durch Deformieren des Außenleiters (2) mit letzterem in elektrischem Kontakt steht, an einem die Adern (11, 12) ringförmig umgreifenden Stützelement (16) abgestützt ist und der Schirm (14) über das Stützelement geschlagen wird

10. Verfahren nach einem der Ansprüche 7 bis 9, **dadurch gekennzeichnet, dass** der mindestens eine weitere Stempel (P2a, P2b) nach dem Verformen des Außenleiters (2) von dem elektrischen Kabel (1) entfernt wird und dass an dessen Stelle das mindestens eine Werkzeugteil (S1, S2) am elektrischen Kabel (1) positioniert wird, um einen Formhohlraum zu bilden, der zusätzlich durch den mindestens einen Stempel (P1a, P1b) abgedichtet und/oder begrenzt wird.

## Claims

1. Method for producing an electrical plug-in connector at an end portion of a multicore electric cable (1), the cores (11, 12) of said cable being surrounded in a ring-like manner in cross section in the end portion by an outer conductor (2), wherein firstly at least one stamp (P1a, P1b) deforms the outer conductor (2) in the direction of the cores (11, 12) radially in portions and secondly the outer conductor (2) is provided with an injection-moulded encapsulation (3) in an injection-moulding die in portions, **characterized**
**in that** the at least one stamp (P1a, P1b), after the deformation of the outer conductor, is positioned on the outer conductor (2) in such a way that the stamp (P1a, P1b) partially delimits a mould cavity to be filled with plasticized moulding compound for forming the injection-moulded encapsulation (3) and that, for further delimiting the mould cavity, at least one die part (S1, S2) of the injection-moulding die is guided in the direction of the outer conductor (2) and is positioned in the area surrounding said outer conductor.

2. Method according to Claim 1, **characterized in that** the at least one stamp (P1a, P1b), after the deformation, is positioned on the outer conductor (2) in such a way that the mould cavity is sealed off and a region of the outer conductor (2) that is covered by the at least one stamp (P1a, P1b) remains free of the plasticized moulding compound introduced into the mould cavity.

3. Method according to Claim 1 or 2, **characterized in that** the at least one stamp (P1a, P1b) radially deforms the outer conductor (2) in order to reduce the distance between the cores (11, 12) and the outer conductor (2) in the radial direction (R).

4. Method according to one of the preceding claims, **characterized in that** the at least one stamp (P1a, P1b) is arranged on the injection-moulding die, so that the end portion of the electric cable (1) is placed on the injection-moulding die before the at least one stamp (P1a, P1b) deforms the outer conductor (2).

5. Method according to one of the preceding claims, **characterized in that** at least two die parts (S1, S2) are positioned in the area surrounding the outer conductor (2) in such a way that the die parts (S1, S2), together with the at least one stamp (P1a, P1b), delimit the mould cavity.

6. Method according to one of the preceding claims, **characterized in that** the respective die part (S1, S2) is formed by a slide which is movable in the radial direction (R) with respect to the outer conductor (2) in order to delimit the mould cavity or to open the mould cavity.

7. Method according to one of the preceding claims, **characterized in that** the electric cable (1), in the region of the plug-in connector, has a shield (13, 14) which surrounds the cores (11, 12) of the electric cable and at least one further stamp (P2a, P2b) deforms the outer conductor (2) in order to distort the outer conductor (2) in such a way that it is in electrical contact with the shield (14).

8. Method according to Claim 7, **characterized in that** two further stamps (P2a, P2b) deform the outer conductor (2) in different directions in order to distort the outer conductor (2) in such a way that it is in electrical contact with the shield (14) of the cable (1).

9. Method according to Claim 7 or 8, **characterized in that** the shield (13, 14) of the cable (1), in the region in which the shield (13, 14) is in electrical contact with the outer conductor (2) owing to distortion of the latter, is supported on a supporting element (16) which engages around the cores (11, 12) in a ring-like manner, and the shield (14) is placed over the supporting element.

10. Method according to one of Claims 7 to 9, **characterized in that** the at least one further stamp (P2a, P2b), after the deformation of the outer conductor (2), is removed from the electric cable (1) and **in that** instead the at least one die part (S1, S2) is positioned on the electric cable (1) in order to form a mould cavity which is additionally sealed off and/or delimited by the at least one stamp (P1a, P1b).

## Revendications

1. Procédé de fabrication d'un connecteur enfichable électrique sur une section d'extrémité d'un câble électrique multifil (1), dont les fils (11, 12) sont entourés dans la section d'extrémité par un conducteur extérieur (2) de section transversale annulaire, d'une part au moins un poinçon (P1a, P1b) façonnant radialement par sections le conducteur extérieur (2) en direction des fils (11, 12) et d'autre part le conducteur extérieur (2) étant pourvu par sections d'un surmoulage (3) dans un outil de moulage par injection, **caractérisé en ce que**
l'au moins un poinçon (P1a, P1b) est positionné sur le conducteur extérieur (2) après le façonnage du conducteur extérieur de telle sorte que le poinçon (P1a, P1b) délimite partiellement une cavité de moulage devant être remplie de masse de moulage plastifiée pour former le surmoulage (3) et **en ce que**, pour délimiter davantage la cavité de moulage, au moins une partie d'outil (S1, S2) de l'outil de moulage par injection est guidée en direction du conducteur extérieur (2) et positionnée dans son environnement.

2. Procédé selon la revendication 1, **caractérisé en ce que** l'au moins un poinçon (P1a, P1b) est positionné sur le conducteur extérieur (2) après le façonnage de telle sorte que la cavité de moulage est étanchéifiée et une zone du conducteur extérieur (2) recouverte par l'au moins un poinçon (P1a, P1b) reste exempte de la masse de moulage plastifiée introduite dans la cavité de moulage.

3. Procédé selon la revendication 1 ou 2, **caractérisé en ce que** l'au moins un poinçon (P1a, P1b) façonne radialement le conducteur extérieur (2) afin de réduire la distance entre les fils (11, 12) et le conducteur extérieur (2) dans la direction radiale (R).

4. Procédé selon l'une quelconque des revendications précédentes, **caractérisé en ce que** l'au moins un poinçon (P1a, P1b) est agencé sur l'outil de moulage par injection de telle sorte que la section d'extrémité du câble électrique (1) est placée sur l'outil de moulage par injection avant que l'au moins un poinçon (P1a, P1b) ne façonne le conducteur extérieur (2).

5. Procédé selon l'une quelconque des revendications précédentes, **caractérisé en ce qu'**au moins deux parties d'outil (S1, S2) sont positionnées dans l'environnement du conducteur extérieur (2) de telle sorte que les parties d'outil (S1, S2) délimitent la cavité de moulage conjointement avec l'au moins un poinçon (P1a, P1b).

6. Procédé selon l'une quelconque des revendications précédentes, **caractérisé en ce que** la partie d'outil respective (S1, S2) est formée par un coulisseau qui peut être déplacé dans la direction radiale (R) par rapport au conducteur extérieur (2) afin de délimiter la cavité de moulage ou de libérer la cavité de moulage.

7. Procédé selon l'une quelconque des revendications précédentes, **caractérisé en ce que** le câble électrique (1) présente, dans la zone du connecteur enfichable, un blindage (13, 14) qui entoure les fils (11, 12) du câble électrique et au moins un autre poinçon (P2a, P2b) façonne le conducteur extérieur (2) afin de déformer le conducteur extérieur (2) de telle sorte que celui-ci soit en contact électrique avec le blindage (14).

8. Procédé selon la revendication 7, **caractérisé en ce que** deux autres poinçons (P2a, P2b) façonnent le conducteur extérieur (2) dans des directions différentes afin de déformer le conducteur extérieur (2) de telle sorte que celui-ci soit en contact électrique avec le blindage (14) du câble (1).

9. Procédé selon la revendication 7 ou 8, **caractérisé en ce que** le blindage (13, 14) du câble (1), dans la zone où le blindage (13, 14) est en contact électrique avec le conducteur extérieur (2) par déformation de ce dernier, est supporté par un élément de support (16) entourant les fils (11, 12) de manière annulaire et le blindage (14) est rabattu sur l'élément de support.

10. Procédé selon l'une quelconque des revendications 7 à 9, **caractérisé en ce que** l'au moins un autre poinçon (P2a, P2b) est retiré du câble électrique (1) après le façonnage du conducteur extérieur (2) et **en ce qu'**à sa place, l'au moins une partie d'outil (S1, S2) est positionnée sur le câble électrique (1) afin de former une cavité de moulage qui est en outre étanchéifiée et/ou délimitée par l'au moins un poinçon (P1a, P1b).
